# EUROPEAN PATENT APPLICATION

(11) **EP 4 336 389 A1**
(43) Date of publication of application: **13.03.2024**
(21) Application number: 22195202.1
(22) Date of filing: 12.09.2022
(51) Int. Cl.: G06F 21/16, G10L 19/018, H04N 21/8358

(54) **METHOD FOR TRACKING AN OBJECT IN A USER SIGNAL**

(71) Applicant: Cugate AG, 10823 Berlin (DE)
(72) Inventor: RHEIN, Hanspeter, 30916 Isernhagen (DE)
(74) Representative: Eisenführ Speiser

(57) **Abstract**

The invention refers to a method for tracking an object in a user signal, e.g., in an audio and/or video signal. A base signal is provided defined by an evolution of a spectrum with time over a plurality of time frames representing a content. A presence of an object in the content in a time frame is determined based on the base signal. A watermark data sequence is embedded into the base signal in the time frames for which a presence of the object is determined to generate a user signal, wherein the embedded watermark data sequence is a unique data sequence that identifies the presence of the object in the user signal in the predetermined time frame. The user signal is provided to a user device (130) for providing the content of the user signal and tracking the presence of the object based on the embedded watermark data sequence.

## Description

### FIELD OF THE INVENTION

The invention refers to a method, an apparatus and a computer program product for tracking an object in a user data signal. Moreover, the invention refers to a method, a server and a computer program product for providing a watermark for tracking an object in a user signal. Furthermore, the invention refers to a user device configured for providing the data content of the user signal generated utilizing the methods, apparatuses and computer program products above and a user data signal generated utilizing the methods, apparatuses and computer program products above.

### BACKGROUND OF THE INVENTION

Tracking an object in a data stream, wherein the object can refer to any of a visible, audio or data object, often requires a lot of computational resources and computational time making it in particular difficult to provide a real-time tracking of an object in a data stream. However, in many application settings such a tracking would be advantageous, for instance, to present a user with important information on the object, that can be of commercial but also of technical nature. However, if real-time tracking is desired, today this is often either not possible with commonly used user devices, like common smartphones, due to the restricted computational resources of such user devices, or the accuracy in the tracking has do be reduced or a time lack has to be taken into account due to the available computational resources. Moreover, it is preferred that the information provided with the tracked object can not be corrupted, for example, with malicious intent. Thus, allowing to track an object in a data stream provided to a user, in particular, to provide information with respect to the object to the user in substantial real-time while preventing an unauthorized manipulation of the information would be advantageous in many applications.

### SUMMARY OF THE INVENTION

It is an object of the present invention to provide a method, an apparatus and a computer program product that allow for an accurate tracking of an object substantially in real-time in content to be presented to a user, in particular, to allow to provide information to the user with respect to the tracked object substantially in real-time to the user. Moreover, the invention allows to prevent an unauthorized manipulation of the information or the tracking. Moreover, it is further an object of the invention to provide a method, a server and a computer program product that allow to generate a user data signal utilizable in the above method, apparatus and computer program product.

In a first aspect of the present invention, a computer implemented method for tracking an object in a user data signal, in particular, in an audio and/or video data signal, is presented, wherein the method comprises a) providing a base data signal, wherein the base data signal is defined by an evolution of a spectrum with time over a plurality of time frames representing a content to be presented to a user, in particular, a video and/or audio content, b) determining a presence or an absence of a predetermined object in the content to be presented to a user in a time frame of the plurality of time frames based on the base data signal for the respective time frame, wherein the predetermined object is a part of the data content to be presented to a user, c) embedding a watermark data sequence into the base data signal in the time frames for which a presence of the predetermined object is determined to generate a user data signal, wherein the embedded watermark data sequence is a unique data sequence that identifies the presence of the predetermined object in the user data signal in the predetermined time frame, and d) providing the user data signal to a user device for providing the content of the user data signal to a user and tracking, by the user device, the presence or absence of the predetermined object in the user data signal based on the embedded watermark data sequence.

Since first a presence or absence of an object is determined in a base data signal and then a watermark data sequence is embedded into the base data signal for time frames for which a presence of the predetermined object is determined to generate a user data signal, wherein the user data signal is then provided to the user device, the computational resource intensive determining of the presence and/or absence of an object in the base data signal can be performed on respective hardware that provides the computational resources for a substantial real time tracking of the object and embedding of the respective watermark data sequence, wherein then the user device only has to utilize a small part of its restricted computational resources for detecting the embedded watermark data sequence in the provided user data signal. Thus, the tracking of the object can be performed on computational hardware specifically adapted for this task, whereas the more general user device then only has to track the respective embedded watermark data sequence which is a computational quite easy task which can easily be performed by most commonly used user devices. Thus, a substantially real-time tracking of an object on a user data signal and a user device becomes possible, wherein moreover the object can be tracked with high accuracy. Furthermore, this has the advantage through the embedding of the watermark data sequence in the user data signal that also comprises the visual and/or audio content to be presented to a user, that information provided with the tracked object cannot be easily filtered out, blocked, changed and/or removed without amending the user data signal and possibly also the content of the user data signal. Thus, the embedding of the watermark data sequence and the base data signal for generating the user data signal is also advantageous over solutions in which simply an additional information signal with respect to a tracked object in the base data signal is sent to the user device. Thus, the method allows for an accurate nearly real-time tracking of an object of content presented to a user at a user device while decreasing the possibilities of tempering with the tracking of the object.

The method refers to a computer implemented method and thus can be performed by any general or dedicated computer adapted to perform the method, for instance, by executing a respective computer program. In particular, the method can be performed by more than one computer device utilizing one or more computer processors. In particular, the method can be performed on different, locally distinct computing devices. For example, some functions of the method can be performed by one or more first computational devices and other functions of the method can be performed by one or more second computational devices. For example, the computer implemented method can be performed in a cloud environment, on a server, a personal computer, etc.

Generally, the computer implemented method is configured for tracking an object in a user data signal, in particular, in an audio and/or video data signal. A user data signal can generally be understood as a data signal that is provided to any kind of user device, e.g. a user interface, which provides the content of the user data signal to the user. Thus, a user data signal can be provided in any analogue or digital format, coding or data structure that is readable by the respective user device, i.e. user terminal. Preferably, the user data signal is an audio and/or video data signal and thus encodes audio and/or video content to be presented to a user. However, the user data signal can also refer to any other visual and/or audio content, for instance, to image content, etc.

In a first step of the method, a base data signal is provided. Generally, the providing of the base data signal can refer, for instance, to receiving the base data signal from an apparatus generating the base data signal, for instance, a camera or microphone, and providing the same for further processing. However, the providing of the base data signal can also refer to accessing a long-term or short-term storage on which the base data signal is already stored and providing the accessed base data signal for further processing. Furthermore, the providing can also refer to a generating of a base data signal, wherein, for instance, the providing can then be performed by a unit generating the base data signal, for instance, a camera or microphone, wherein the generated base data signal is then provided for further processing.

A base data signal can refer to any signal that represents content intended eventually for reception by a user, in particular a human user. Preferred examples of a base data signal are an audio signal, representing the evolution of a spectrum of frequencies for acoustic waves over time, e.g. the spectrum ranging for example from 300 Hz to 3400 Hz for telephony or from 10 Hz to 20 kHz for high quality reproduction of a classical concert, or a video signal referring to single as well as moving images, where a frequency of the useful signal is, for example, for displaying on a TV or cinema screen, defined by the image properties and lies between 0 Hz, e.g. an empty image, and a maximum frequency determined by the rows and columns of the screen and a refresh rate for moving images, e.g. 6.5 MHz for many TV-systems. However, base data signals can also include signals representing text strings or other representations of content and also future developments of such signals intended directly or indirectly in particular for human perception. Thus, as shown by the examples provided above, the base data signal can be defined by an evolution of a spectrum with time over a plurality of time frames representing a content to be presented to a user. The time frames can be defined by the data structure itself, for instance, as the individual images in a video signal, wherein in this case a time frame can refer to the time in which one of the individual images is presented on a screen to a user or to a music track from the beginning of the music track to the end of the music track. However, a time frame can also be arbitrarily defined, for instance, can be user defined, independent of the structure of the base data signal, for example, by defining in a video signal a time frame by the number of images shown to a user during this time frame, by the amount of data presented to the user, or simply by defining a certain time period in which the data content is presented to the user. For example, for an audio signal representing audio content the audio content can be divided into a plurality of time frames each with a length of, preferably, 30 seconds. The time frames can be defined as subsequent time frames so that time frames do not overlap. However, it can also be advantageous to defined times frames with at least some overlap.

Base data signals can be represented in an analogous way, for example as radio or TV signals, or might be represented as digital signals, for example PCM-signals formed by sampling an analogous signal with subsequent quantizing and perhaps coding steps. In any case a base data signal is meant to include a complete representation of the relevant data set representing the content to be provided to the user, be it a single piece of music or a set of such tracks, a single image or a complete movie.

In a further step, a presence or an absence of a predetermined object in the content to be presented to a user in a time frame of the plurality of time frames is determined based on the base data signal for the respective time frame. Generally, the predetermined object is a part of the data content to be presented to a user. The object has to be understood as referring to information in the base data signal that represents at least a part of the same entity, i.e. the same visual or audio entity. For example, the object can refer to at least a part of a visual entity in a video, like a person in the video, a face of a person in the video, an animal in the video, an inanimate object in a video, etc. However, the object can also refer to at least a part of an audio entity in an audio signal, for instance, to a music piece, a part of a music piece, a music track, a voice belonging to a predetermined person, one or more sentences of a speech, etc. Thus, the object can generally be defined by a user or operator, for instance, by defining a commonality of respective content to define the data entity forming the object. In the example of a voice, the commonality is that the audio signals of the voice are generated by the same person, wherein the commonality of a person in a video is that all images of the person in the video, although they might be quite different to each other, for instance, if the person is moving, are also generated by the same person. However, the commonality can also refer to any other clearly definable feature independent of the commonality being a person, for example, the commonality can also be an animal generating the content, a real or virtual object generating the content, an affiliation of one or more persons or objects generating the content belonging to a certain group, etc. Generally, methods for determining the presence and/or absence of such a predetermined object in a data signal, in particular, a video and/or audio signal, are known. For example, specific algorithms searching for a respective commonality within each time frame of a data signal can be utilized. In particular, such algorithms can be utilized that directly search for one or more features defining the commonality in the base data signal itself or that first determining the content of the base data signal and then search the respective one or more features defining the commonality in the content of the base data signal. For example, for determining the presence of a voice, respective voice recognition algorithms can be utilized or for determining the presence of a face respective face recognition algorithms can be utilized.

In a preferred embodiment, the determining of a presence or absence of the predetermined object comprises utilizing a machine learning based determination model, wherein the machine learning based determination model has been parameterized to determine the presence or absence of a predetermined object in the content to be presented to a user in a time frame based on the base data signal for the time frame. In particular, any known machine learning based algorithm can be utilized, for instance, neural networks, regression models, classification algorithms, etc. For example, suitable machine learning algorithms in this context can refer to regression models based on linear regression, random forests, boosted trees, lasso, rich regression and mass algorithms or classification models, in particular, random forests, logic regressions, SVM algorithms or any kind of neural network algorithm. In particular, the machine learning based determination model can be trained, i.e. parameterized, for one or more predetermined objects utilizing respective training data. For example, the training data can comprise a plurality of base data signal time frames that are labelled as either comprising or not comprising the respective object, i.e. that are labelled with a respective absence or presence of the object in the content of the base data signal time frame, wherein the labelling can be performed by a user. The such labelled training data can then be utilized to train the machine learning based determination model using any known training method such that the machine learning based determination model is parameterized to determine the presence or absence of the predetermined object in the content to be presented to a user in a time frame based on the base data signal for the time frame. Generally, for each predetermined object a specific machine learning based determination model can be trained, i.e. parameterized, wherein the base data signal can then be provided to all machine learning based determination models trained for an object that is expected to appear in at least one time frame of the base data signal subsequently or preferably at the same time. The result of the machine learning based determination model can indicate whether the respective predetermined object is present or absent in the respective time frame of the base data signal. This method for determining the presence or absence of a predetermined object is in particular suitable for a video data signal determining the presence or absence of a visual object in the content represented by the base data signal, since machine learning based models, in particular, neural networks, have been found to be in particular suitable for the task of classifying visual objects. However, also audio objects like a voice of a person, a piece of music, or a part of a piece of music, can be determined utilizing respective machine learning based determination models that have been trained accordingly.

Generally, in other embodiments also other determination methods can be utilized. For example, also methods like footprinting can be utilized that determine specific characteristics of the object and compares these specific characteristics of the object with the characteristics of content presented by the base data signal. Such footprinting technology is in particular useful in the context of audio signals and audio content. An example for such footprinting is, for instance, provided in the patent disclosure EP 1684263 B1, in cooperated herein by reference. Moreover, for specific applications respectively specific sophisticated and suitable methods are known. For example, for determining faces in video content respective facial recognition algorithms can be utilized.

In a further step, a watermark data sequence is embedded into the base data signal in the time frames for which a presence of the predetermined object is determined to generate a user data signal. Generally, the embedded watermark data sequence is a unique data sequence that identifies the presence of the predetermined object in the user data signal in the predetermined time frame. However, the embedded watermark data sequence can also provide further information with respect to the presence of the predetermined object. In particular, the embedded watermark data sequence can comprise a unique identifier of the predetermined object, but also further characteristics of the object like a name of a person, commercial data, like an owner of a piece of music, or the producer of a product, or technical information, like technical details, for instance, a serial number or DIN norm of a machine, information for the decoding of certain content related to the object, etc. Preferably, the watermark data sequence encodes a storage location on which further information with respect to the predetermined content is stored and/or information for accessing the information, for instance, a key or password. This allows to easily access and securely access the respective information, in particular, if the additional information can not be provided in the watermark itself.

Generally, each watermark method for embedding a watermark data sequence into a base data signal can be utilized. In a preferred embodiment, the unique data sequence of the watermark data sequence includes a sequence of first and second data states, wherein for embedding a first state of the watermark data sequence in the base data signal the ratio of a first spectral amplitude of the base data signal at a first embedding frequency to a second spectral amplitude of the base data signal at a second embedding frequency is established to be higher or equal to a first value of a threshold parameter, and for embedding the second state of the watermark data sequence in the base data signal the ratio of the second spectral amplitude of the based data signal at the second embedding frequency to the first spectral amplitude of the base data signal at a first imprinting frequency is established to be higher or equal to a second value of the threshold parameter. Utilizing this method has the advantage that malicious modifications of the watermark and the user data signal can be prevented. Details of this method can be found, for instance, in the patent application EP 1684265 A1.

According to this method, the user data signal can be equal to the base data signal for time frames in which a presence of a predetermined object is not determined and can be modified by the embedded watermark data sequence for time frames for which a presence of the predetermined object is determined. This does however not exclude further transformations or modifications to the base data signal before providing it as user data signal to the user device. For example, the base data signal can be further transferred into another format that is readable by the user device bevor providing the transferred signal comprising the embedded watermark data sequence as user data signal. Generally, the presence or absence of more than one predetermined object in the content to be presented to a user in a time frame can be determined. In this case, for each of the predetermined objects a different unique data sequence as watermark data sequence is embedded into the base data signal for time frames for which the respective object is present. Accordingly, in this case the user data signal can be equal to the base data signal for time frames in which none of the predetermined objects is determined as being present and can be modified by one or more embedded watermark data sequences for the one or more predetermined objects that are present in the other time frames of the base data signal.

In a further step, the user data signal is provided to a user device for providing the data content of the user data signal to a user. The providing of the user data signal to a user device can refer, for instance, to sending the user data signal via a wired or wireless connection to the user device. For example, the user data signal can be sent via Internet or any other computational network to the user device. The user data signal can also be sent via a cloud environment or any other distributional network to a user device. Moreover, the user data signal can also be sent to a user in form of a general TV or radio signal, wherein in this case the user device can be a television device or a radio device. Generally, the user device can refer to any user terminal that allows to provide the content of the user data signal to a user. Further, it is preferred that the user device is configured for tracking the presence or absence of the predetermined object in the user data signal based on the embedded watermark data sequence. In particular, the user device can utilize known computational algorithms that allow for a decoding of the watermark data sequence, in particular, for the determining of the presence of a specific watermark data sequence in the user data signal. Based on the presence of the watermark data sequence, the user device can then be configured for determining that the object is present or absent in a respective time frame and thus in content, in particular, currently, presented to a user. Preferably, the user device determines the presence of an object by decoding the watermark data sequence in real-time, i.e. during the presentation of the content to the user.

In an embodiment, the tracking of the predetermined object comprises decoding the watermark data sequence in the user data signal by the user device for determining a presence or absence of the predetermined object in the data content of the time frame currently provided to the user and indicating the presence of the predetermined object to the user, if the predetermined object is present in the content presented in the predetermined time frame. For example, the indicating of the presence of the predetermined object to a user can refer to any form of notification provided to the user utilizing visual or audio or even tactile indication. For example, if the predetermined object is present in video content currently displayed to a user, for example, in a currently displayed movie scene, a more or less invasive visible indication can be presented to a user on the same screen showing the visual content. In particular, in case of an audio signal, the respective presence of an object, for example, the playing of a predetermined audio clip or piece of music can be indicated to a user utilizing visual indicators that are shown on a display of the user device playing the audio content.

In a preferred embodiment, the method further comprises providing an object information database, wherein the object information database stores information related to one more predetermined objects, wherein decoding of the watermark data sequence in the user data signal comprises determining an identity of the predetermined object, if the predetermined object is present, and determining the object information related to the predetermined object in the object information database based on the object identity, wherein indicating the presence of the predetermined object to the user comprises providing at least a part of the information related to the predetermined object in the object information database to the user via the user device. For example, the object information database can be sent together with the user data signal by a respective provider of the user data signal, for example, a TV station or radio station. However, the user device can also be adapted to access the respective object information database that is provided, for instance, in a cloud environment, on a server, or in any other form of storage unit that is communicatively coupled to the user device. Based on the unique data sequence referring to the watermark data sequence of the predetermined object encoding, for example, the object identity in form of a unique identification code or in any other form that allows to determine an identity of the predetermined object, and the respective object information database can be queried for further information on the identified object. At least a part of the information that is stored related to the predetermined object in the object information database can then be provided to the use via the user device when indicating the presence of the predetermined object. For example, if the user device identifies that in a live soccer game video signal a watermark data sequence indicating the presence of a specific player in the soccer game, the object information database can provide additional information on this player like his affiliation to a soccer club, player statistics, individual background, etc. However, also commercial information can be provided to a user, for example, where a specific product referring to the object that is determined in the user data signal can be purchased. Moreover, also other characteristics, for instance, an owner of a piece of music or technical details on a specific product can be provided as additional information to a user. In a preferred embodiment, the object information database is provided as part of or in form of a sequential distributed database, in particular, a blockchain database. Providing the object information database in form of a sequential distributed database, in particular, in form of a blockchain database, has the advantage that the information provided in the object information database is not easily changeable, in particular, from an unauthorized party. This can in particular be important in cases of right ownership, payment contracts, creator rights, etc. In this context a sequentially distributed database refers to a database on which entries can only be stored and accessed in a sequential order, wherein the storage of the entries is distributed to different networked computers which communicate and coordinate the access to the database. Preferably the sequential distributed database further comprises at least one of the following characteristics append only, immutable, temper evident and temper resistant. In this context, append only refers to a characteristic of the database that new data can be appended to the storage but the existent data is immutable, i.e. cannot be modified after is created. Generally, it is preferred that the sequential distributed database is itself immutable and thus does not allow a changing of data after its creation. Furthermore, it is preferred that the sequential distributed database is temper evident and thus makes it easy to detect if data stored on the database has been accessed or manipulated, for instance, by unauthorized parties. Moreover, it is preferred that the database is temper resistant, i.e. is resistant to manipulations by unauthorized parties. In particular, a plurality of database technologies exist that allow to provide these preferred characteristics. Preferably the sequential distributed database refers to a blockchain database, for example, provided in form of a smart contract. These characteristics of the database allow to save the tracking of the predetermined content in a secure, easily controllable and trustable environment that prevents malicious manipulations while at the same time allowing access to the database from a plurality of sources. This is in particular advantageous in contrast to centralized or centrally managed databases that can for security reasons often only be accessed by a predetermined party making the tracking of the predetermined content in a plurality of sources that can belong to many different parties difficult and computational resource intensive. Thus, utilizing sequentially distributed databases, in particular, blockchain databases, the database can be managed in a distributed manner without being vulnerable to malicious manipulations.

In a further aspect of the invention, a computer implemented method for providing a watermark for tracking an object in a user data signal, in particular, in an audio and/or video data signal, is presented, wherein the method comprises a) providing a base data signal, wherein the base data signal is defined by an evolution of a spectrum with time over a plurality of time frames representing a content to be presented to a user, in particular, a video and/or audio content, b) determining a presence or an absence of a predetermined object in the content to be presented to a user in a time frame of the plurality of time frames based on the base data signal for the predetermined time frame, wherein the predetermined object is a part of the data content to be presented to a user, and c) embedding a watermark data sequence into the base data signal in the time frames for which a presence of the predetermined object is determined to generate a user data signal, wherein the embedded watermark data sequence is a unique data sequence that identifies the presence of the predetermined object in the user data signal in the predetermined time frame.

In a further aspect, an apparatus for tracking an object in a user data signal, in particular, in an audio and/or video data signal, is presented, wherein the apparatus comprises one or more processors configured to perform the functions a) providing a base data signal, wherein the base data signal is defined by an evolution of a spectrum with time over a plurality of time frames representing a content to be presented to a user, in particular, a video and/or audio content, b) determining a presence or an absence of a predetermined object in the content to be presented to a user in a time frame of the plurality of time frames based on the base data signal for the predetermined time frame, wherein the predetermined object is a part of the data content to be presented to a user, c) embedding a watermark data sequence into the base data signal in the time frames for which a presence of the predetermined object is determined to generate a user data signal, wherein the embedded watermark data sequence is a unique data sequence that identifies the presence of the predetermined object in the user data signal in the predetermined time frame, d) providing the user data signal to a user device for providing the data content of the user data signal to a user, and e) tracking, by a processor associated with the user device, the presence or absence of the predetermined object in the user data signal based on the embedded watermark data sequence.

In a further aspect, a server for providing a watermark for tracking an object in a user data signal, in particular, in an audio and/or video data signal, is presented, wherein the server comprises one or more processors configured to perform the functions a) providing a base data signal, wherein the base data signal is defined by an evolution of a spectrum with time over a plurality of time frames representing a content to be presented to a user, in particular, a video and/or audio content, b) determining a presence or an absence of a predetermined object in the content to be presented to a user in a time frame of the plurality of time frames based on the base data signal for the predetermined time frame, wherein the predetermined object is a part of the data content to be presented to a user, and c) embedding a watermark data sequence into the base data signal in the time frames for which a presence of the predetermined object is determined to generate a user data signal, wherein the embedded watermark data sequence is a unique data sequence that identifies the presence of the predetermined object in the user data signal in the predetermined time frame.

In a further aspect, a user device configured for providing the data content of the user data signal to a user and tracking the presence or absence of the predetermined object in the user data signal based on an embedded watermark data sequence that is embedded as described above is presented.

In a further aspect, a system is presented, wherein the system comprises a) a server as described above, wherein the server is further configured for providing the generated user data signal to a user device, and b) a user device as described above.

In a further aspect of the invention, a computer program product for tracking an object in a userdata signal is presented, wherein the computer program product is configured to cause a apparatus as described above to perform the method as described above.

In a further aspect of the invention, a computer program product for providing a watermark for tracking an object in a user data signal is presented, wherein the computer program product is configured to cause a server as described above to perform the method as described above.

In a further aspect of the invention, a user data signal generated utilizing a method as described above and/or the server as described above is presented.

It shall be understood that the methods as described above, the apparatuses as described above and the computer program products as described above have similar and/or identical preferred embodiments, in particular, as defined in the dependent claims.

It shall be understood that a preferred embodiment of the present invention can also be any combination of the dependent claims or above embodiments with the respective independent claim.

These and other aspects of the invention will be apparent from and elucidated with reference to the embodiments described hereinafter.

### BRIEF DESCRIPTION OF THE DRAWINGS

In the following drawings:
- Fig. 1: shows schematically and exemplarily a system for tracking an object in a user data signal according to the invention, and
- Fig. 2: shows schematically and exemplarily a flowchart of a method for tracking an object in a user data signal according to the invention.

### DETAILED DESCRIPTION OF EMBODIMENTS

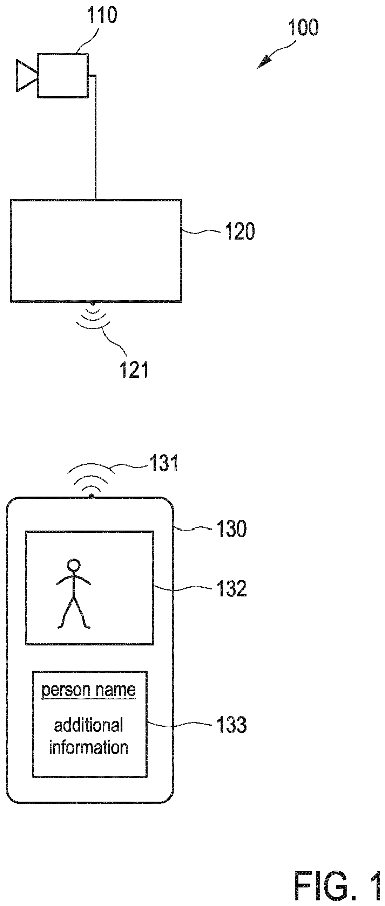

Fig. 1 shows schematically and exemplarily an embodiment of a system 100 for tracking an object in a user data signal. In the following example, the user data signal refers to a video data signal, in particular, a live video stream that is based on live images of a live event. However, although the following example utilizes a live video stream as example for a user data signal, the invention can also be applied to any other user data signal that allows to present content to a user and is defined by an evolution of a spectrum with time over a plurality of time frames representing the respective content. In particular, the user data signal can also be an audio signal, in particular, a live audio signal of a live audio event. Moreover, the user data signal can also refer to a data signal that is not generated based on a live event, but, for instance, refers to previously produced content like a movie, a TV series, a piece of music, a speech, an audio book, etc.

The system 100 comprises an apparatus 120 for providing a watermark data sequence for tracking an object in a user data signal that is communicatively coupled 121, 131 with a user device 130. Optionally, the system 100 can further comprise a base data signal generation unit 110 that generates the base data signal. However, the base data signal generation unit 110 can also be omitted and the apparatus 120 can receive the base data signal, for instance, from a long- or short-term storage unit. In the example shown in Fig. 1, the base data signal generation unit 110 can be a camera recording a live event, for instance, a sports event like a soccer game, and generating based on the recording the base data signal comprising as content the images of the live event in form of a live video stream. The base data signal generation unit 110 can then transmit the base data signal to apparatus 120.

Apparatus 120 can be realized in form of any computational device, for example, in form of the server comprising one or more processors. However, the apparatus 120 can also be realized in form of a distributed computing network, for instance, a cloud network comprising a plurality of computing devices and processors. Generally, the apparatus 120 provides the respective computing resources necessary for performing the following functions.

The apparatus 120 is configured in a first step to provide the base data signal, for instance, transmitted by the base data signal generation unit 110. For example, the providing of the base data signal can refer to receiving the base data signal from the base data signal generation unit 110 and providing the same for further processing in the apparatus 120, for instance, to other functional units of the apparatus 120. Further, the apparatus 120 is configured to determine a presence or an absence of a predetermined object in the content to be presented to a user in a time frame of the plurality of time frames based on the base data signal for the respective time frame. For example, a user can, via a user input, provide the predetermined object to the apparatus 120, wherein the apparatus 120 can then be configured to compare the predetermined object or one or more characteristics of the predetermined object with objects or characteristics of objects in the content represented by the base data signal. Preferably, one or more machine learning based determination models have been trained for determining the predetermined object based on the base data signal. For example, if the base data signal refers to a live stream of a live sports event showing one or more participants of the sports event, based on previous sports event a machine learning based determination model can be trained for each of the participants in the sports event. For example, base data signals, in particular, video live streams, of previous events can be prepared into time frames that are labelled as showing at least a part of the predetermined object, for instance, the participant of the sports event, and time frames that do not show the object. Based on this training data, a machine learning based determination model can then learn to differentiate between time frames of the base data signal comprising data representing the object, in this example the participant, and time frames that do not comprise data representing the object. Moreover, if the object is a human being, for example, one of the sports event participants, also known face recognition techniques and methods can be utilized for determining the presence or absence of a respective participant in a time frame of the content to be presented to the user.

In another embodiment, the presence or absence of the predetermined content can also be determined based on one or more characteristics of the predetermined content associated with a footprint of the predetermined content in the user data signal. Generally, a footprint of the content of the base data signal can refer to a combination of characteristics of the content of the user data signal that allow for a unique identification of the predetermined content. However, in some cases, in order to determine the presence of a predetermined content, it might be necessary to determine the footprint of more than one time frame. The respective footprint can comprise characteristics like frequency distributions, maxima und minima values of signals in one or more frequencies, spectral patterns of the respective user signal, and/or any measure that can be derived from respective characteristics of the user data signal. In a preferred embodiment, the footprint is determined such that it cannot be easily manipulated, at least not in a way that would not disturb the perception of the user of the content. An example for such a footprint is provided, for instance, in the patent EP 1 684 263 A1 incorporated herein by reference and preferably utilized for determining the footprint of the base data signal. The such determined footprint of the base data signal can then be compared to already stored footprints for predetermined objects. If a stored footprint lies within predetermined limits of the determined footprint of the base data signal, the respective predetermined object associated with the stored footprint is present in the base data signal. This embodiment is in particular advantageous of the object refers to the whole content of the base data signal, for instance, refers to at least a part of a movie or piece of music.

Further, the apparatus 120 is then configured for embedding a watermark data sequence into the base data signal in the time frames for which a presence of the predetermined object is determined to generate a user data signal. Generally, a watermark data sequence is a unique data sequence that identifies a presence of the predetermined object in the user signal in the predetermined time frame. For example, the unique data sequence can refer to a unique identification code of the predetermined object, for instance, of the participant of the sports event. However, the unique data sequence of a watermark data sequence can also comprise further information with respect to the object, for example, one or more characteristics of the object, technical details of the object, important information with respect to rights referring to the object, for instance, owner rights, etc. Generally, it is preferred that the watermark data sequence is embedded in the base data signal such that a user will not perceive the embedding of the watermark data sequence in the content represented by the user data signal. Thus, without decoding the watermark data sequence, the user is oblivious of the embedding of the watermark data sequence in the user data signal. Preferably, watermarking methods are utilized that prevent removing, changing or otherwise illegally amending the watermark data sequence. In particular, preferably a method as described in the patent EP 1 684 265 A1 can be utilized for embedding a unique watermark data sequence.

The such generated user data signal can then be provided, for instance, via a communicative coupling 121, 131 to a user device 130. The user device 130 can, for instance, be any user device, for instance, a portable user device like a smartphone, tablet, or any other communication device. However, the user device can also be any other computational device, for instance, a laptop, a PC, a cloud terminal, etc. Moreover, the user device 130 can also be, for example, a TV or a radio system that comprises at least some rudimentary computational capabilities which is the case with today's commonly used systems. The user device 130 is then configured to track the presence or absence of the predetermined object in the user data signal based on the embedded watermark data sequence. In particular, the user device 130 is configured to decode the watermark data sequence for determining the presence or absence of the predetermined object in the data content of a time frame, for instance, a time frame currently provided to a user. Since the encoding process is known, the respective decoding process is a computationally very easy process that can be performed by any known and commonly utilized processor of respective user devices. As shown in Fig. 1, the user device 130 can then, in addition to the content represented by the user data signal shown here as a video 132 of the sports event recorded by the camera 110, also provide additional information or at least information of the presence of a predetermined object in a currently shown content. For example, in a part of the screen of user device 130, in this case, an information box 133 is shown which provides the user with an indication that a certain participant of the sports event is currently present in the video 132. Moreover, also additional information encoded in the watermark data sequence, for instance, a name of the participant, can be provided in the information box 133.

Further, it is preferred that an object information database is provided, for instance, in a cloud based service or on a storage, that can be accessed by the user device 130. The object information database can then store information related to a predetermined object, for instance, to a participant of the sports event, in association with the identity of the predetermined object encoded in the watermark data sequence. Thus, the user device 130 can be configured based on the identity determined from the watermark data sequence in the user data signal to access the object information database and to search for a respective associated information. A part of this associated information can then also be provided to a user, for example, in the information box 133, wherein the additionally provided information can, for instance, be customized by a user based on his interests. For example, for a sports event participant, the related information can refer to sport statistics, a current sport result for this participant, personal data, latest results of other sports events for this participant, etc., wherein a user can then customize the additional information based on his/her interests. For example, the user can predetermine, for instance, in an interface, that he is only interested in current results of the participants. In this case, only this information will be provided to the user in the information box 133. In some applications, it might also be advantageous if certain information is always presented to a user such that the user cannot determine via customizing to not be provided with information. For example, in cases of a music piece it might be advantageous if the user is always presented with the respective ownership or the respective creator of the music piece without the possibility to skip this information.

In order to prevent malicious manipulation of the respective information associated with an object, the object information database can be provided as part of or in form of a sequentially distributed database, in particular, a blockchain database. Such databases are intrinsically difficult to compromise such that the information related to the respective object, in particular, important information like rights associated with the respective object, ownership, or creator information, cannot be changed by a malevolent third person.

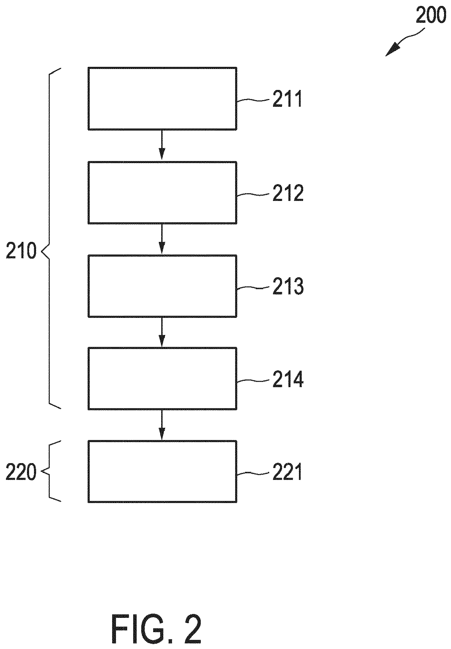

Fig. 2 shows schematically and exemplarily a flowchart of a method 200 for tracking an object in a user data signal. Generally, the method 200 can be performed by the system 100 as described with respect to Fig. 1. In a first step, the method 200 comprises providing a base data signal, for instance, as described above with respect to Fig. 1. In the next step 212, a presence or absence of a predetermined object in the content to be presented to a user in a time frame of the plurality of time frames is determined based on the base data signal for the respective time frame. Also the determining of the presence or absence of the predetermined object can be performed as already described above with respect to Fig. 1. In a next step, a watermark data sequence is embedded into the base data signal in the time frames for which a presence of the predetermined object is determined to generate a user data signal. Also this step can be performed in accordance with the above described principles. The such generated user data signal is then provided to the user device in step 214. Generally, the steps 211, 212, 213 and 214 can be performed by first one or more computing devices comprising one or more processors, for instance, by an apparatus 120 as described in Fig. 1. Preferably, the one or more computing devices 210 performing these steps are not directly accessible by a user and are locally differentiable from the user device 220 that performs the last step of the method 221. In particular, the last step of the method 221 refers to tracking the presence or absence of the predetermined object in the user data signal based on the embedded watermark data sequence. Generally, dividing the processing of the signal and the tracking of the object as described above into a part that can be performed by a first computing device and a part that can then be performed by the user device allows to perform the computer resource intensive tasks of determining the object in the base data signal on according suitable computing devices with the respective computing power. These computing devices can easily be provided, for instance, in form of servers, cloud services or distributed networking and allow to process huge amounts of data in nearly real-time for embedding the respective watermark if an object present in a time frame is detected. The user device that, in most cases, has much more restricted demands on the computational resources, for instance, to keep the user device portable or to meet respective design specifications, can then perform the relatively easy and less computational resource intensive task of simply decoding the watermark data sequence if present in the user data signal. Thus, a user can be provided very accurately with the tracking of an object in substantially in real-time together with optional or additional information with respect to the tracked object, wherein both the tracking and also the additional information fulfil the requirements of data security and prevent malevolent changes or amendments.

Although the above described exemplary embodiments were described with respect to an example referring to a sports event that is recorded by a video camera providing as base data signal a video stream signal, in other embodiments completely different content can be provided by the base data signal and the base data signal can also be recorded or provided in any other means. For example, the base data signal can also be an audio signal or a combined video/audio signal and the content can refer to an audio content like a live music event, a piece of music, a music track, a speech, an audio book, etc. Based on the different possibilities of the content of the base data signal, also the different predetermined objects can be determined, wherein the objects can also refer to audio content, data content, script content, etc.

Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality.

A single unit or device can fulfil the functions of several items recited in the claims. The mere fact that certain measures are recited in mutually different dependent claims does not indicate that a combination of these measures cannot be used to advantage.

Procedures like the providing of the base data signal, the determining of the object, the generating of the user data signal, the providing of the user data signal and the tracking of the object, etc. performed by one or several units or devices can be performed by any other number of units or devices. These procedures can be implemented as program code means of a computer program and/or as dedicated hardware.

A computer program product may be stored/distributed on a suitable medium, such as an optical storage medium or a solid-state medium, supplied together with or as part of other hardware, but may also be distributed in other forms, such as via the Internet or other wired or wireless telecommunication systems.

Any reference signs in the claims should not be construed as limiting the scope.

The invention refers to a method for tracking an object in a user signal, e.g., in an audio and/or video signal. A base signal is provided defined by an evolution of a spectrum with time over a plurality of time frames representing a content. A presence of an object in the content in a time frame is determined based on the base signal. A watermark data sequence is embedded into the base signal in the time frames for which a presence of the object is determined to generate a user signal, wherein the embedded watermark data sequence is a unique data sequence that identifies the presence of the object in the user signal in the predetermined time frame. The user signal is provided to a user device for providing the content of the user signal and tracking the presence of the object based on the embedded watermark data sequence.

## Claims

1. A computer implemented method for tracking an object in a user data signal, in particular, in an audio and/or video data signal, wherein the method (200) comprises:
Providing (211) a base data signal, wherein the base data signal is defined by an evolution of a spectrum with time over a plurality of time frames representing a content to be presented to a user, in particular, a video and/or audio content,
determining (212) a presence or an absence of a predetermined object in the content to be presented to a user in a time frame of the plurality of time frames based on the base data signal for the respective time frame, wherein the predetermined object is a part of the data content to be presented to a user,
embedding (213) a watermark data sequence into the base data signal in the time frames for which a presence of the predetermined object is determined to generate a user data signal, wherein the embedded watermark data sequence is a unique data sequence that identifies the presence of the predetermined object in the user data signal in the predetermined time frame, and
providing (214) the user data signal to a user device (130) for providing the content of the user data signal to a user and tracking (221), by the user device (130), the presence or absence of the predetermined object in the user data signal based on the embedded watermark data sequence.

2. The method according to claim 1, wherein the tracking of the predetermined object comprises decoding the watermark data sequence in the user data signal by the user device (130) for determining a presence or absence of the predetermined object in the data content of the time frame currently provided to the user and indicating the presence of the predetermined object to the user, if the predetermined object is present in the content presented in the predetermined time frame.

3. The computer implemented method according to claim 2, wherein the method further comprises providing an object information database, wherein the object information database stores information related to one more predetermined objects, wherein decoding of the watermark data sequence in the user data signal comprises determining an identity of the predetermined object, if the predetermined object is present, and determining the object information related to the predetermined object in the object information database based on the object identity, wherein indicating the presence of the predetermined object to the user comprises providing at least a part of the information related to the predetermined object in the object information database to the user via the user device (130).

4. The method according to claim 3, wherein the object information database is provided as part of or in form of a sequential distributed database, in particular, a blockchain database.

5. The method according to any of the proceeding claims, wherein the determining of a presence or absence of the predetermined object comprises utilizing a machine learning based determination model, wherein the machine learning based determination model has been parameterized to determine the presence or absence of a predetermined object in the content to be presented to a user in a time frame based on the base data signal for the time frame.

6. The method according to any of the preceding claims, wherein the unique data sequence of the watermark data sequence includes a sequence of first and second data states, wherein for embedding a first state of the watermark data sequence in the base data signal the ratio of a first spectral amplitude of the base data signal at a first embedding frequency to a second spectral amplitude of the base data signal at a second embedding frequency is established to be higher or equal to a first value of a threshold parameter, and for embedding the second state of the watermark data sequence in the base data signal the ratio of the second spectral amplitude of the based data signal at the second embedding frequency to the first spectral amplitude of the base data signal at a first imprinting frequency is established to be higher or equal to a second value of the threshold parameter.

7. A computer implemented method for providing a watermark for tracking an object in a user data signal, in particular, in an audio and/or video data signal, wherein the method comprises:
providing a base data signal, wherein the base data signal is defined by an evolution of a spectrum with time over a plurality of time frames representing a content to be presented to a user, in particular, a video and/or audio content,
determining a presence or an absence of a predetermined object in the content to be presented to a user in a time frame of the plurality of time frames based on the base data signal for the predetermined time frame, wherein the predetermined object is a part of the data content to be presented to a user, and
embedding a watermark data sequence into the base data signal in the time frames for which a presence of the predetermined object is determined to generate a user data signal, wherein the embedded watermark data sequence is a unique data sequence that identifies the presence of the predetermined object in the user data signal in the predetermined time frame.

8. An apparatus for tracking an object in a user data signal, in particular, in an audio and/or video data signal, wherein the apparatus comprises one or more processors configured to perform the functions:
providing a base data signal, wherein the base data signal is defined by an evolution of a spectrum with time over a plurality of time frames representing a content to be presented to a user, in particular, a video and/or audio content,
determining a presence or an absence of a predetermined object in the content to be presented to a user in a time frame of the plurality of time frames based on the base data signal for the predetermined time frame, wherein the predetermined object is a part of the data content to be presented to a user,
embedding a watermark data sequence into the base data signal in the time frames for which a presence of the predetermined object is determined to generate a user data signal, wherein the embedded watermark data sequence is a unique data sequence that identifies the presence of the predetermined object in the user data signal in the predetermined time frame,
providing the user data signal to a user device (130) for providing the data content of the user data signal to a user, and
tracking, by a processor associated with the user device (130), the presence or absence of the predetermined object in the user data signal based on the embedded watermark data sequence.

9. A server for providing a watermark for tracking an object in a user data signal, in particular, in an audio and/or video data signal, wherein the server (120) comprises one or more processors configured to perform the functions:
providing a base data signal, wherein the base data signal is defined by an evolution of a spectrum with time over a plurality of time frames representing a content to be presented to a user, in particular, a video and/or audio content,
determining a presence or an absence of a predetermined object in the content to be presented to a user in a time frame of the plurality of time frames based on the base data signal for the predetermined time frame, wherein the predetermined object is a part of the data content to be presented to a user, and
embedding a watermark data sequence into the base data signal in the time frames for which a presence of the predetermined object is determined to generate a user data signal, wherein the embedded watermark data sequence is a unique data sequence that identifies the presence of the predetermined object in the user data signal in the predetermined time frame.

10. A user device configured for providing the data content of the user data signal to a user and tracking the presence or absence of the predetermined object in the user data signal based on an embedded watermark data sequence that is embedded in accordance with any of claims 1 to 6.

11. A system, wherein the system comprises a) a server according to claim 9, wherein the server is further configured for providing the generated user data signal to a user device (130), and b) a user device (130) according to claim 10.

12. A computer program product for tracking an object in a user data signal, wherein the computer program product is configured to cause a apparatus according to claim 8 to perform the method according to any of claims 1 to 6.

13. A computer program product for providing a watermark for tracking an object in a user data signal, wherein the computer program product is configured to cause a server according to claim 9 to perform the method according to claim 7.

14. A user data signal generated utilizing a method according to claim 7 and/or the server according to claim 9.
